# DEMANDE DE BREVET EUROPEEN

(11) **EP 1 094 196 A1**
(43) Date de publication de la demande: **25.04.2001**
(21) Numéro de dépôt: 00402868.4
(22) Date de dépôt: 17.10.2000
(51) Int. Cl.: E21B 49/02, E21B 25/00, G01N 1/08, G01N 1/28, G01N 33/24, A01C 21/00, E21B 15/00, A01B 79/00, E21B 7/00

(54) **Procédé et dispositif de prélévement pour la préparation d'échantillons de sol**

(30) Priorité: 19.10.1999 FR 9913013
(71) Demandeur: Sirtec S.A., 28630 Fontenay/Eure (FR)
(72) Inventeur: Bachoux, Vincent, 28800 Bonneval (FR)
(74) Mandataire: Cabinet HERRBURGER

(57) **Abrégé**

Dispositif permettant d'effectuer des prélèvements de sols notamment destinés au domaine de l'agriculture de précision caractérisé en ce qu'il est constitué par une sonde automatisée (1) montée sur roues (4₁), motorisée ou destinée à être attelée à un tracteur (2) et dont le châssis (3) est équipé de plusieurs bras articulés portant chacun un outil de prélèvement à leur extrémité de façon à pouvoir prélever simultanément en profondeur plusieurs fractions de sol ou carottes destinées à être mélangées pour obtenir un échantillon de sol représentatif d'un point géo-référencé puis analysées par un laboratoire d'analyse de sol afin de réaliser une carte des teneurs du sol et, le cas échéant, d'en déduire à l'aide d'un logiciel une carte de fertilisation.

## Description

La présente invention concerne un dispositif permettant d'effectuer des prélèvements de sols notamment destinés au domaine de l'agriculture de précision.

Depuis de nombreuses années, les spécialistes dans le domaine de l'agronomie ont cherché à améliorer la fertilité des sols en leur apportant des éléments qui leur font défaut (amendements, engrais) ou des produits phytosanitaires.

Pour établir le traitement qui doit être effectué dans chaque cas particulier, il est indispensable de prélever des échantillons de sols, à une profondeur donnée correspondant à la profondeur de labour ; ces échantillons sont ensuite analysés dans des laboratoires spécialisés, dans le but de préconiser des traitements spécifiques aptes à améliorer la fertilité des sols.

L'emplacement de ces prélèvements doit être relevé avec précision afin de pouvoir faire ultérieurement d'autres prélèvements exactement au même endroit.

Dans le cadre de l'agriculture traditionnelle, ces prélèvements sont effectués manuellement à l'aide de sondes spécifiques, ce à raison d'environ un prélèvement pour dix hectares, voire un prélèvement par parcelle ou même par exploitation agricole.

Lors de chacun de ces prélèvements, on prélève plusieurs fractions de sol ou carottes (en règle générale de l'ordre de huit à quinze) régulièrement réparties sur la surface étudiée et on les mélange avant de les analyser pour obtenir une image représentative de cette surface.

On peut ainsi établir une image moyenne de l'ensemble d'une parcelle, à partir de laquelle on détermine les opérations de fertilisation ou les traitements phytosanitaires devant être effectués ou encore, le cas échéant, les densités de semis devant être adoptées pour améliorer les rendements du sol de manière optimum.

Dans le cadre de l'agriculture traditionnelle, la densité de prélèvement est toutefois insuffisante pour établir une carte précise de la composition de besoins des sols et seul peut être déterminé un apport moyen à réaliser sur une parcelle ; il en résulte obligatoirement des zones de « surapport » liées à un surcoût et à des risques de pollution et des zones de carence dans lesquelles les potentiels du sol sont insuffisamment utilisés.

Pour remédier à cet inconvénient, les spécialistes ont eu l'idée « d'affiner » l'analyse du sol en effectuant un nombre plus important de prélèvements par hectare (jusqu'à quatre) de façon à obtenir une carte des teneurs du sol et par suite une carte de fertilisation précise d'une parcelle ; on peut ainsi connaître les besoins réels de chaque zone de celle-ci pour lui apporter tous les éléments qui lui sont nécessaires donc utiliser pleinement ses possibilités, ce à un coût minimum et sans « surapport » et donc sans risques pour l'environnement : c'est l'agriculture de précision qui permet de « descendre » à l'intérieur de chaque parcelle pour déterminer avec précision les opérations de fertilisation à effectuer.

Dans le cadre de celle-ci, il est particulièrement avantageux de faire appel au système de positionnement par GPS (global positioning system) connu en lui-même et à l'électronique, d'une part, pour choisir les points de prélèvement avec la précision nécessaire et, d'autre part, pour guider automatiquement un engin de fertilisation (épandeur d'engrais par exemple) en fonction d'un dosage d'apport prédéfini après analyse des prélèvements et établissement de la carte de fertilisation à l'aide d'un logiciel adapté.

La prise de tels prélèvements de sols géo-référencés c'est-à-dire positionnés avec précision à l'aide d'un GPS est cependant liées en pratique à un certain nombre d'inconvénients.

En effet, dans le cadre de l'agriculture traditionnelle et en utilisant les sondes manuelles classiques, les spécialistes réalisent, en règle générale, environ vingt prélèvements par jour soit environ 200 à 250 carottes, ce qui correspond à un chantier moyen de 200 hectares par jour.

Dans le cadre de l'agriculture de précision et en utilisant les mêmes sondes manuelles, en considérant un maillage de quatre prélèvements par hectare, constitués chacun de huit carottes, il est nécessaire, pour une même surface, d'effectuer quarante fois plus de prélèvements qu'en agriculture traditionnelle et de réaliser trente fois plus de carottes, vu que leur nombre est légèrement réduit. On ne peut donc ainsi traiter que de l'ordre de sept à huit hectares par jour, ce qui est notablement insuffisant.

Il est de plus à noter que le coût d'un prélèvement est fonction du matériel immobilisé (sonde, véhicule, système GPS...) et du personnel employé ; par suite, une augmentation de la production quotidienne entraînerait une multiplication des investissements et du personnel difficilement concevable.

En conséquence, le coût des prélèvements freine, à l'heure actuelle, le développement de l'agriculture de précision.

La présente invention a pour objet de remédier à cet inconvénient en proposant un dispositif de prélèvement de sols de nature à remplacer les sondes manuelles classiques en permettant une production en volume beaucoup plus importante, et par suite, une réduction en conséquence du coût de l'opération.

Selon l'invention, ce dispositif est caractérisé en ce qu'il est constitué par une sonde automatisée montée sur roues, motorisée ou destinée à être attelée à un tracteur et dont le châssis est équipé de plusieurs bras articulés portant chacun un outil de prélèvement à leur extrémité de façon à pouvoir prélever simultanément en profondeur plusieurs fractions de sol ou carottes destinées à être mélangées pour obtenir un échantillon de sol représentatif d'un point géo-référencé puis analysées par un laboratoire d'analyse de sols afin de réaliser une carte des teneurs du sol et, le cas échéant, d'en déduire à l'aide d'un logiciel une carte de fertilisation permettant de déterminer les opérations de fertilisation et/ou les traitements phytosanitaires devant être effectués et/ou le cas échéant les densités de semis à réaliser.

Il est à noter que ce dispositif pourrait être mis en oeuvre pour effectuer des prélèvements de sols dans un domaine autre que l'agriculture de précision sans pour cela sortir du cadre de l'invention.

La sonde automatisée, conforme à l'invention, comporte avantageusement huit bras articulés permettant de prélever simultanément huit carottes.

Selon une autre caractéristique de l'invention, les bras articulés sont mobiles entre, d'une part, une position de repos dans laquelle ils sont relevés et repliés sur le châssis de la sonde et, d'autre part, une position de travail dans laquelle ils sont abaissés et déployés autour de celle-ci, de sorte que les outils de prélèvement touchent le sol.

Selon l'invention, les bras articulés sont, de préférence, dimensionnés de sorte que, en position de travail, les outils de prélèvement soient uniformément répartis notamment sur une ellipse autour du châssis de la sonde à une distance d'environ 2 mètres du centre de celui-ci.

Selon une autre caractéristique de l'invention, les outils de prélèvement comportent chacun une gouge de forage rotative coopérant avec un système de vérins et un moteur hydraulique pour pouvoir pénétrer dans le sol et s'y enfoncer, puis en être extraite après prélèvement d'une carotte lorsque les bras articulés sont en position de travail.

La profondeur de pénétration des gouges de forage est de préférence réglable, notamment à l'aide d'un système de butées mécaniques.

Selon une autre caractéristique de l'invention, les outils de prélèvement comportent chacun un organe de vidange automatique des gouges de forage lorsque les bras articulés sont en position de repos.

Cet organe de vidange peut avantageusement être constitué par un dispositif à vérin poussant un doigt gratteur à l'intérieur de la gouge de forage.

Selon une autre caractéristique de l'invention, le châssis de la sonde est équipé d'un système de tapis transporteurs coopérant avec les bras articulés en position de repos pour transférer les carottes préalablement prélevées et extraites des gouges de forage, vers un poste d'ensachage qui peut être manuel ou automatique.

Selon une caractéristique préférentielle de l'invention, le dispositif est muni d'organes de commande électroniques permettant de commander automatiquement le déplacement des bras articulés entre la position de travail et la position de repos, la pénétration et l'enfoncement dans le sol des gouges de forage, ainsi que l'extraction des carottes et leur transfert jusqu'à un poste d'ensachage où un opérateur les dispose dans un sac.

Conformément à l'invention, chaque prélèvement peut être effectué par deux opérateurs, à savoir le conducteur du tracteur ou de la sonde lorsqu'elle est automotrice et un opérateur placé sur le châssis de celle-ci pour contrôler les opérations, lancer les cycles de prélèvement et assurer l'ensachage.

L'énergie hydraulique nécessaire à la mise en oeuvre de ces opérations est fournie soit par la sonde elle-même lorsqu'elle est automotrice soit par la centrale du tracteur qui alimente un bloc de distribution proportionnelle.

Le dispositif conforme à l'invention peut, par ailleurs, être muni d'organes de sécurité tels que par exemple des organes de nature à empêcher la pénétration des gouges de forage dans le sol lorsque le frein à main de la sonde ou du tracteur n'est pas serré.

Un tel dispositif est de nature à effectuer entre 150 et 200 prélèvements, soit 1 200 à 1 600 carottes par jour.

L'invention se rapporte également à un procédé de prélèvement d'un échantillon de sol à l'aide du dispositif susmentionné.

Ce procédé est caractérisé par la succession des étapes suivantes :
- on choisit un point de prélèvement en utilisant un système de positionnement par GPS (global positioning system),
- on place la sonde au droit de ce point de prélèvement,
- on effectue le prélèvement de façon à obtenir plusieurs carottes,
- on mélange ces carottes pour obtenir un échantillon de sol représentatif du point de prélèvement,
- on fait analyser cet échantillon par un laboratoire d'analyse de sols,
- à partir du résultat de cette analyse, on réalise une carte des teneurs du sol et à l'aide d'un logiciel on en déduit, le cas échéant, une carte de fertilisation.

Les caractéristiques du dispositif ainsi que du procédé qui font l'objet de l'invention seront décrites plus en détails à l'aide des dessins annexés dans lesquels :
- la figure 1 est une vue latérale d'un dispositif de prélèvement de sols destiné au domaine de l'agriculture de précision,
- la figure 2 est une vue de dessus du dispositif représenté sur la figure 1,
- la figure 3 est une vue arrière de ce dispositif
- les figures 4a, 4b, 4c et 4d sont des vues en coupe représentant un outil de prélèvement, respectivement dans différentes positions,
- la figure 5 est une vue de dessus du système de tapis transporteurs,
- la figure 6 est une vue latérale du système de tapis transporteurs représenté sur la figure 5,
- la figure 7 est une vue arrière de ce même système. Selon l'exemple de réalisation représenté sur les figures, le dispositif est constitué par une sonde automatisée 1, attelée à un tracteur 2.

Comme il a déjà été indiqué, la sonde pourrait également être constituée par un engin automoteur sans pour cela sortir du cadre de l'invention.

Le châssis 3 de la sonde 1 est monté sur quatre roues latérales 41 et une roue avant 42 formant béquille et comporte à sa partie arrière un siège 6 destiné à un opérateur.

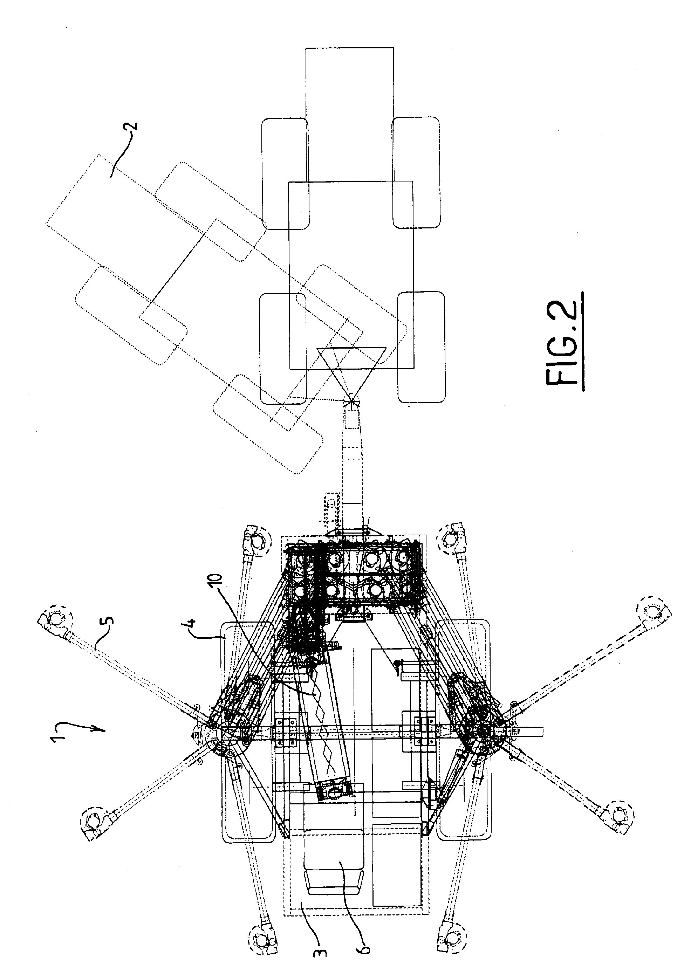

Selon la figure 2, le châssis 3 de la sonde 1 est équipé de huit bras articulés 5 répartis par groupes de quatre de part et d'autre de celui-ci.

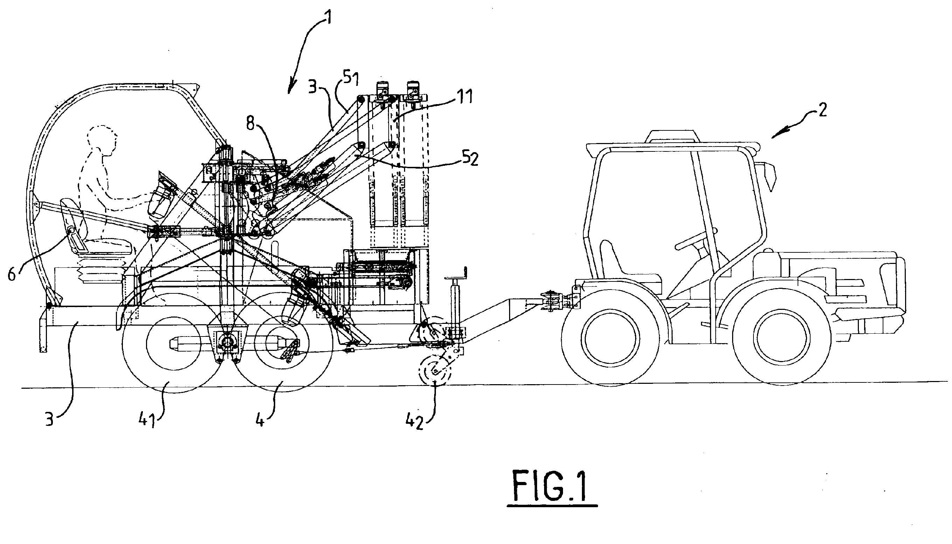

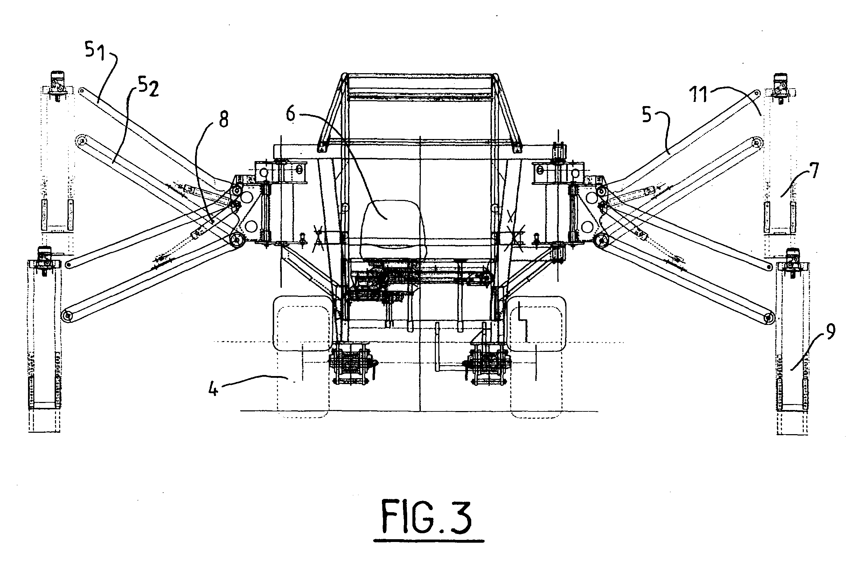

Ces bras articulés sont mobiles entre d'une part une position de repos représentée sur la figure 1 dans laquelle ils sont relevés et repliés sur le châssis 3 de la sonde 1, à la partie avant de celui-ci, et d'autre part une position de travail représentée sur les figures 2 et 3 dans laquelle ils sont abaissés et déployés autour de la sonde 1.

Selon les figures 1 et 3, les bras articulés 5 sont constitués chacun par deux longerons 51, 52 essentiellement parallèles, dont les extrémités respectives sont articulées sur une console 11, portant un outil de prélèvement 7 qui touche le sol en position de travail comme représenté sur la figure 3 de façon à pouvoir prélever simultanément en profondeur plusieurs carottes qui seront ensuite mélangées pour obtenir un échantillon de sol représentatif d'un point géo-référencé.

Il est à noter, que dans cette position, les outils de prélèvement 7 sont répartis essentiellement sur une ellipse autour du châssis 3 de la sonde à une distance d'environ 2 mètres du centre de celui-ci, dans la position représentée sur la figure 2.

Des vérins 8 représentés sur les figures 1 et 3 permettent de commander le déplacement des bras articulés 5 entre la position de repos et la position de travail et inversement.

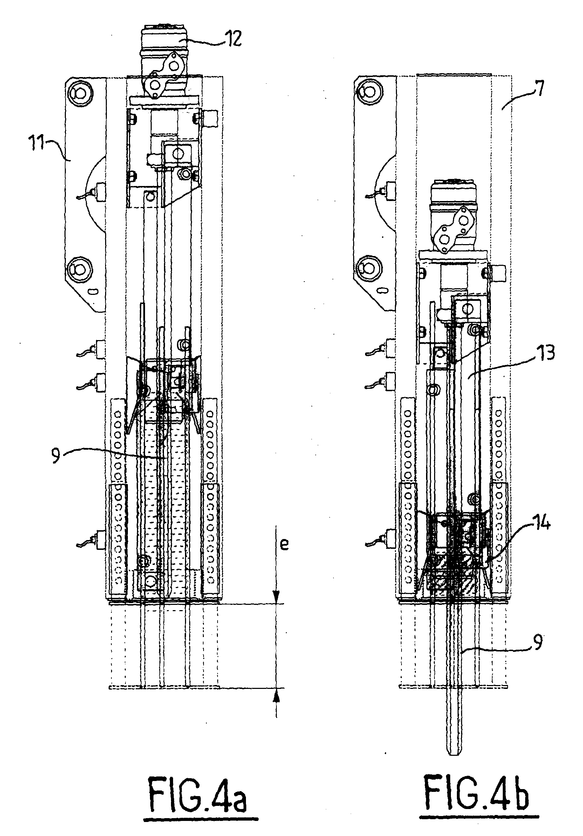

Selon les figures 4a à 4d, les outils de prélèvement 7 sont équipés chacun à leur partie interne d'une gouge de forage 9, entraînée en rotation par un moteur hydraulique 12 et coopérant avec un système de vérins 13.

A partir de la position de travail représentée sur la figure 4a, dans laquelle l'outil de prélèvement 7 touche de sol, le système de vérins 13 commande la pénétration dans le sol de la gouge de forage rotative 9 selon la figure 4b. La profondeur de pénétration dans le sol de cette gouge 9 peut être réglée dans une plage e représentée sur la figure 4a.

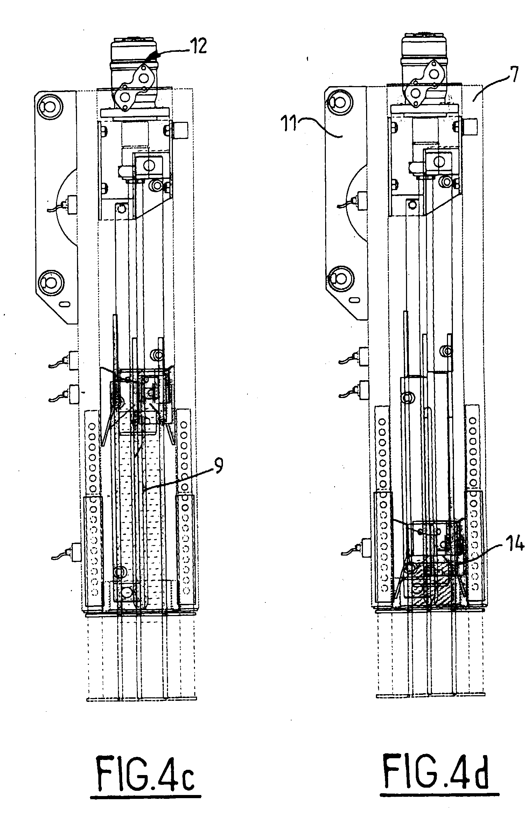

Selon la figure 4c, le système de vérins 13 commande, ensuite, l'extraction de l'échantillon qui a été prélevé et la rétraction de la gouge de forage 9 à la partie interne de l'outil de prélèvement 7.

Selon les figures 4a à 4d, les outils de prélèvement 7 sont, par ailleurs, équipés chacun d'un organe de vidange 14 permettant l'extraction automatique des échantillons de sol prélevés par les gouges de forage 9, lorsque les bras articulés sont repliés en position de repos, comme représenté sur la figure 4d.

Selon la figure 2, le châssis 3 de la sonde 1 est en outre équipé d'un système de tapis transporteurs 10 qui coopère avec les bras articulés 5 dans la position de repos représentée sur la figure 1 de façon à transférer les carottes préalablement prélevées et extraites des gouges de forage 9 à proximité de l'opérateur assis sur le siège 6 afin de lui permettre de les ensacher manuellement.

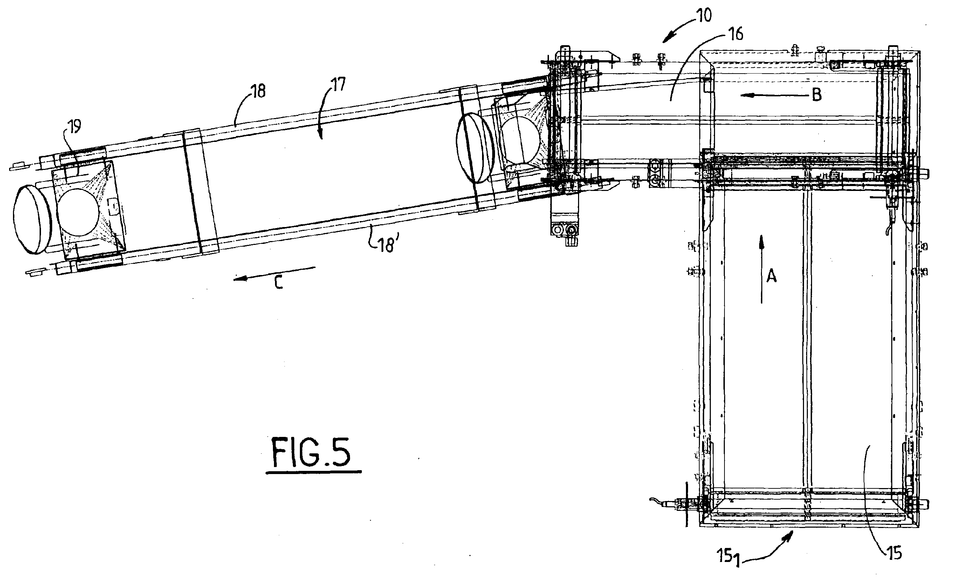

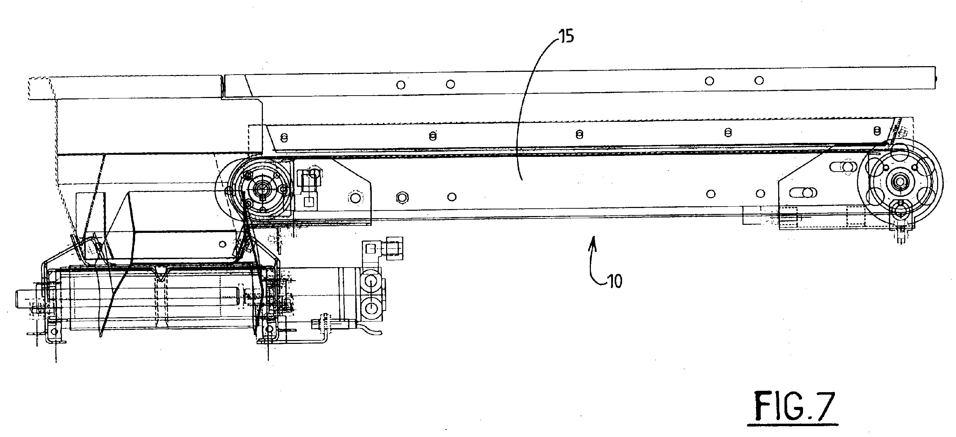

Plus précisément et selon les figures 5, 6 et 7, le système de tapis transporteurs 10 est en fait constitué d'un ensemble de trois tapis 15, 16 et 17.

Selon la figure 5, le premier tapis 15 qui est de relativement grande largeur reçoit à son extrémité 15₁ située à la partie inférieure de la figure, les carottes extraites des outils de prélèvement 7 équipant les bras articulés se trouvant sur la partie droite de la sonde 1 dans le sens de déplacement de celle-ci (figure 2) et les déplace selon la flèche A vers le second tapis 16 qui est de moins grande largeur et est monté perpendiculairement au premier tapis 15 en dessous de celui-ci.

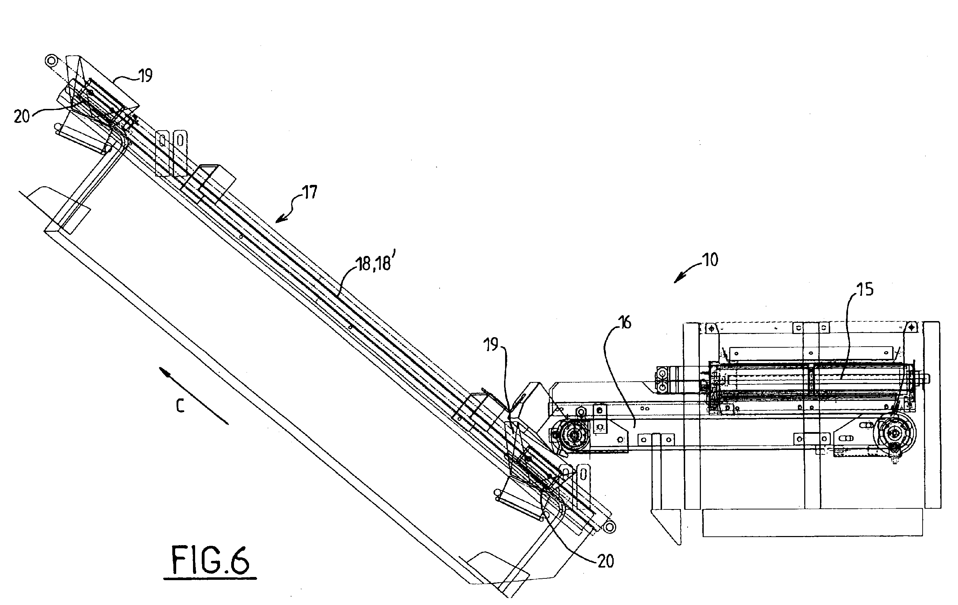

Ce second tapis 16 reçoit les carottes provenant des outils de prélèvement 7 situés sur la partie gauche de la sonde et les déplace selon la flèche B vers le troisième tapis 17 qui est incliné de bas en haut comme représenté sur la figure 6 et permet de convoyer les carottes qui ont été prélevées jusqu'à l'opérateur assis sur le siège 6 selon la flèche C.

Selon les figures 5 et 6, le convoyeur incliné 17 est en fait constitué par deux courroies crantées 18, 18' entraînées par un moteur hydraulique et portant un sac 19 maintenu par un support 20 dans lequel le second tapis 16 déverse les carottes qui ont été prélevées.

Lorsque le sac 19 contenant les carottes est remonté jusqu'à l'opérateur assis sur le siège 6, celui-ci le détache de son support 20, le ferme et l'étiquette puis fixe un nouveau sac sur le support ; celui-ci peut alors redescendre automatiquement jusqu'au second tapis 16.

Il est à noter que la sonde 1 est équipée d'organes de commande électroniques non représentés sur les figures permettant à l'opérateur placé sur le siège 6 de lancer les cycles de prélèvement et de contrôler le mouvement des bras 5. L'énergie nécessaire à la mise en oeuvre de ces différents processus est fournie soit par la centrale du tracteur 2 qui alimente un bloc de distribution proportionnelle, soit par une centrale propre à la remorque.

## Revendications

1. Dispositif permettant d'effectuer des prélèvements de sols notamment destinés au domaine de l'agriculture de précision,
caractérisé en ce qu'
il est constitué par une sonde automatisée (1) montée sur roues (41), motorisée ou destinée à être attelée à un tracteur (2) et dont le châssis (3) est équipé de plusieurs bras articulés (5) portant chacun un outil de prélèvement (7) à leur extrémité de façon à pouvoir prélever simultanément en profondeur plusieurs fractions de sol ou carottes destinées à être mélangées pour obtenir un échantillon de sol représentatif d'un point géo-référencé puis analysées par un laboratoire d'analyse de sol afin de réaliser une carte des teneurs du sol et, le cas échéant, d'en déduire à l'aide d'un logiciel une carte de fertilisation.

2. Dispositif selon la revendication 1,
caractérisé en ce qu'
il comporte huit bras articulés (5).

3. Dispositif selon l'une quelconque des revendications 1 et 2,
caractérisé en ce que
les bras articulés (5) sont mobiles entre, d'une part, une position de repos dans laquelle ils sont relevés et repliés sur le châssis (3) de la sonde (1) et, d'autre part, une position de travail dans laquelle ils sont abaissés et déployés autour de celle-ci de sorte que les outils de prélèvement (7) touchent le sol.

4. Dispositif selon la revendication 3,
caractérisé en ce que
les bras articulés (5) sont dimensionnés de façon que, en position de travail, les outils de prélèvement (7) soient uniformément répartis autour du châssis (3) de la sonde (1) à une distance d'environ 2 mètres du centre de celui-ci.

5. Dispositif selon l'une quelconque des revendications 1 à 4,
caractérisé en ce que
les outils de prélèvement (7) comportent chacun une gouge de forage rotative (9) coopérant avec un système de vérins et un moteur hydraulique pour pouvoir pénétrer dans le sol et s'y enfoncer puis en être extraite après prélèvement d'une carotte lorsque les bras articulés (5) sont en position de travail.

6. Dispositif selon la revendication 5,
caractérisé en ce que
la profondeur de pénétration dans le sol des gouges de forage est réglable.

7. Dispositif selon l'une quelconque des revendications 5 et 6,
caractérisé en ce que
les outils de prélèvement (7) comportent chacun un organe de vidange automatique des gouges de forage (9) lorsque les bras articulés (5) sont en position de repos.

8. Dispositif selon l'une quelconque des revendications 5 à 7,
caractérisé en ce que
le châssis de la sonde est équipé d'un système de tapis transporteurs (10) coopérant avec les bras articulés (5) en position de repos pour transférer les carottes préalablement prélevées et extraites des gouges de forage (9) vers un poste d'ensachage.

9. Dispositif selon l'une quelconque des revendications 1 à 8,
caractérisé en ce qu'
il est muni d'organes de commande électroniques.

10. Procédé de prélèvement d'un échantillon de sol à l'aide d'un dispositif selon l'une quelconque des revendications 1 à 9,
caractérisé par
la succession des étapes suivantes :
- on choisit un point de prélèvement en utilisant un système de positionnement par GPS (global positioning system),
- on place la sonde au droit de ce point de prélèvement ,
- on effectue le prélèvement de façon à obtenir plusieurs carottes,
- on mélange ces carottes pour obtenir un échantillon de sol représentatif du point de prélèvement,
- on fait analyser cet échantillon par un laboratoire d'analyse de sols et
- à partir du résultat de cette analyse, on réalise une carte de teneurs du sol et à l'aide d'un logiciel on en déduit, le cas échéant, une carte de fertilisation.
